(19)

**Europäisches Patentamt**
**European Patent Office**
**Office européen des brevets**

(11) **EP 3 155 736 B1**

(12) **EUROPÄISCHE PATENTSCHRIFT**

(45) Veröffentlichungstag und Bekanntmachung des Hinweises auf die Patenterteilung:
**09.05.2018 Patentblatt 2018/19**

(21) Anmeldenummer: **14747360.7**

(22) Anmeldetag: **31.07.2014**

(51) Int Cl.:
*H04J 3/06* (2006.01)     *H04L 12/801* (2013.01)

(86) Internationale Anmeldenummer:
**PCT/EP2014/066495**

(87) Internationale Veröffentlichungsnummer:
**WO 2016/015769 (04.02.2016 Gazette 2016/05)**

(54) **VERFAHREN ZUM ÜBERTRAGEN VON ZEITSYNCHRONISATIONSNACHRICHTEN IN EINEM KOMMUNIKATIONSNETZWERK, NETZWERKKOMPONENTE UND KOMMUNIKATIONSNETZWERK**

METHOD FOR TRANSMISSION OF TIMING MESSAGES IN A COMMUNICATION NETWORK, NETWORK COMPONENT AND COMMUNICATION NETWORK

PROCÉDÉ DE TRANSMISSION DE MESSAGES DE TEMPS DANS UN RÉSEAU DE COMMUNICATION, COMPONENT DE RÉSEAU ET RÉSEAU DE COMMUNICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.04.2017 Patentblatt 2017/16**

(73) Patentinhaber: **Siemens Aktiengesellschaft 80333 München (DE)**

(72) Erfinder: **HEINE, Holger 26607 Aurich (DE)**

(56) Entgegenhaltungen:
EP-A1- 2 680 466     US-A1- 2008 117 938
US-A1- 2012 311 168     US-B1- 8 718 482

**Beschreibung**

Die Erfindung betrifft ein Verfahren zum Übertragen von Zeitsynchronisationsnachrichten in einem Kommunikationsnetzwerk, bei dem Zeitsynchronisationsnachrichten über das Kommunikationsnetzwerk zwischen einer Master-Uhr und einer mit der Uhrzeit der Master-Uhr zu synchronisierenden Slave-Uhr übertragen werden, eine Netzwerkkomponente des Kommunikationsnetzwerks, die zumindest zwei Ports aufweist, die Zeitsynchronisationsnachrichten an einem Port empfängt und über einen anderen Port versendet, die Netzwerkkomponente mittels einer internen Uhr eine Verweildauer einer jeweiligen Zeitsynchronisationsnachricht innerhalb der Netzwerkkomponente zwischen dem Empfangen und dem Versenden der Zeitsynchronisationsnachricht ermittelt und eine die Verweildauer angebende Verweildauer-Information an die Slave-Uhr übermittelt, und die Slave-Uhr eine Synchronisierung auf die Master-Uhr unter Verwendung der jeweiligen empfangenen Zeitsynchronisationsnachrichten und der jeweils zugehörigen Verweildauer-Information durchführt.

Die Erfindung betrifft auch eine entsprechend eingerichtete Netzwerkkomponente und ein entsprechend ausgebildetes Kommunikationsnetzwerk.

In Kommunikationsnetzwerken besteht häufig die Anforderung, mit dem Kommunikationsnetzwerk verbundene Geräte zeitlich miteinander zu synchronisieren. Dazu beinhalten die einzelnen Geräte üblicherweise eigene Uhren, die mittels spezieller Verfahren aufeinander zu synchronisieren sind. Besonders wichtig ist eine genaue Zeitsynchronisation in Automatisierungs- und Steueranlagen für technische Anlagen und Prozesse, die räumlich verteilte Automatisierungsgeräte aufweisen, die über ein Kommunikationsnetzwerk miteinander verbunden sind.

Anforderungen, die eine zeitliche Synchronisation voraussetzen, bestehen hierbei beispielsweise darin, Messwerte mit mehreren Automatisierungsgeräten zeitlich synchron erfassen zu können oder Messwerte von mehreren Automatisierungsgeräten aufgrund von Zeitstempeln miteinander vergleichen zu können. Außerdem müssen Überwachungs-, Steuer- und Regelaufgaben häufig zeitlich exakt miteinander synchronisiert ausgeführt werden. In solchen Automatisierungs- und Steueranlagen müssen die Uhren verschiedener Automatisierungsgeräte üblicherweise im Mikrosekundenbereich aufeinander synchronisiert sein. Ein Beispiel einer Automatisierungsanlage ist eine Energieautomatisierungsanlage zur Steuerung und Überwachung und zum Schutz elektrischer Energieversorgungsnetze und Schaltstationen ("Substation Automation System").

Eine Möglichkeit zur Synchronisation von Uhren verteilter Geräte besteht darin, in jedem Gerät einen mittels eines Funksenders verteilten Zeittakt zu empfangen und die jeweilige geräteinterne Uhr an den Zeittakt anzupassen. Beispielsweise kann hierfür das von dem satellitengestützten GPS-System (GPS - Global Positioning System) ausgesandte Zeitsignal verwendet werden. Diese Lösung ist aufgrund der hierfür notwendigen Empfänger in allen zu synchronisierenden Geräten vergleichsweise teuer; außerdem ist nicht überall ein ausreichender Empfang des GPS-Zeitsignals gewährleistet.

Eine andere Möglichkeit besteht darin, das Kommunikationsnetz selbst zur Zeitsynchronisation zu verwenden. In diesem Fall werden innerhalb des Kommunikationsnetzes Zeitsynchronisationsnachrichten übertragen und zur Zeitsynchronisation herangezogen. Eine Methode zur Durchführung einer Zeitsynchronisation mittels Zeitsynchronisationsnachrichten ist beispielsweise im internationalen Standard IEEE 1588-2008 festgelegt und wird als "Precision Time Protocol" (PTP) bezeichnet.

Gemäß dem PTP-Standard wird innerhalb eines Kommunikationsnetzwerks ein angeschlossenes Gerät mittels eines sogenannten "Best Master Clock" Algorithmus als sogenannte "Grandmaster-Uhr" ausgewählt, auf dessen Uhr alle anderen Geräte (Slave-Uhren, auch als "Ordinary Clocks" bezeichnet) zu synchronisieren sind. Dazu sendet der Grandmaster Zeitsynchronisationsnachrichten zu einem Absendezeitpunkt $t_1$ der eigenen Uhr an die Slaves. Dieser Zeitpunkt $t_1$ wird entweder direkt in der Zeitsynchronisationsnachricht eingetragen oder in einer Folgenachricht an die Slaves übermittelt. Der jeweilige Slave empfängt die Zeitsynchronisationsnachricht und führt bei bekannter Zeitverzögerung (Offset) zwischen dem Absendezeitpunkt $t_1$ der Zeitsynchronisationsnachricht beim Grandmaster und dem zugehörigen Empfangszeitpunkt $t_2$ gemäß der Uhr des Slaves zur Zeitsynchronisation eine entsprechende Anpassung seiner Uhrzeit durch.

Der Offset zwischen dem Versendezeitpunkt $t_1$ und dem Empfangszeitpunkt $t_2$ ist durch die Übertragungszeit zwischen dem Grandmaster und dem Slave gegeben und wird in regelmäßigen Abständen gemäß dem nachfolgend beschriebenen Verfahren ermittelt. Dazu sendet der Grandmaster eine Zeitsynchronisationsnachricht zum Absendezeitpunkt $t_1$ der eigenen Uhr an den jeweiligen Slave. Der Slave speichert deren Eingangszeitpunkt $t_2$ entsprechend seiner eigenen Uhr. Daraufhin sendet der Slave eine weitere Zeitsynchronisationsnachricht (Delay_Request) an den Grandmaster und speichert deren Absendezeitpunkt $t_3$. Der Grandmaster empfängt die Zeitsynchronisationsnachricht vom Slave und speichert deren Empfangszeitpunkt $t_4$. Dieser Zeitpunkt $t_4$ wird daraufhin mit einer Antwort (Delay_Response) an den Slave übermittelt, bei dem nunmehr die Zeitpunkte $t_1$ bis $t_4$ vorliegen. Daraus kann der Slave unter Verwendung der Gleichung

$$OS = \frac{(t_2 - t_1) - (t_4 - t_3)}{2}$$

den Unterschied OS (Offset) zwischen seiner Uhr und der Grandmasteruhr berechnen und zur Nachführung seiner eigenen Uhr verwenden. Zur Anwendung dieser Gleichung wird vorausgesetzt, dass der Versand der Nachrichten von dem Grandmaster zum Slave dieselbe Zeit in Anspruch nimmt wie der Versand von Nachrichten in die Gegenrichtung vom Slave zum Grandmaster.

Um auch in komplexeren Kommunikationsnetzwerken eine Zeitsynchronisation durchführen zu können, sind gemäß der IEEE 1588 neben der Grandmaster-Uhr und den Slave-Uhren sogenannte Grenz-Uhren ("Boundary Clocks") definiert worden, die sowohl im Zusammenspiel mit dem Grandmaster eine Slave-Rolle einnehmen können als auch im Zusammenspiel mit anderen Slave-Uhren eine Master-Rolle ausüben. Eine Master-Uhr führt mit den angeschlossenen Slaves prinzipiell dieselben Schritte durch wie oben für das Verhältnis Grandmaster-Slave beschrieben, lediglich müssen sich die Master-Uhren selbst noch als Slaves mit der Grandmaster-Uhr synchronisieren. Nachfolgend werden - sofern nicht anders erwähnt - sowohl die Grandmaster-Uhr als der Grandmaster-Uhr untergeordnete Master-Uhren zusammenfassend als Master-Uhren bezeichnet.

Neben den Boundary Clocks existiert seit der Version 2 des IEEE 1588 Standard aus dem Jahr 2008 auch die Definition für sogenannte Transparente Uhren ("Transparent Clocks"), die die Zeitsynchronisationsnachrichten zwischen einer Master-Uhr und einer Slave-Uhr lediglich weiterleiten, ohne eigenständig die Rollen einerseits einer Slave- und andererseits eine Master-Uhr zu übernehmen. Solche Transparente Uhren können beispielsweise Netzwerkkomponenten in Form von Switchen oder Routern sein. Da allerdings die Zeitdauer, während der eine Zeitsynchronisationsnachricht innerhalb einer solchen Netzwerkkomponente vor ihrer Weiterleitung verweilen, von unterschiedlichen Faktoren abhängt und üblicherweise nicht konstant ist, müssen solche Netzwerkkomponenten die Verweildauer mit einer eigenen internen Uhr ermitteln und als Verweildauer-Information an die Slave-Uhr übermitteln, damit diese die Verweildauer-Information von dem Slave gemeinsam mit dem bekannten Offset für die Zeitsynchronisation mit der Master-Uhr berücksichtigt werden kann.

Ein Verfahren der eingangs genannten Art, bei dem eine Netzwerkkomponente, die eine Transparente Uhr darstellt, verwendet wird, ist beispielsweise aus der EP 2680466 A1 bekannt. Das bekannte Verfahren zielt dabei darauf ab, einen bestimmten Abschnitt der Zeitsynchronisationsnachricht, z.B. eine Präambel, für die Übermittlung der Verweildauer-Information zu verwenden. Die EP 2680466 A1 beschreibt hierbei auch, dass mit der internen Uhr der Netzwerkkomponente Empfangs- und Versendezeitpunkte der jeweiligen Zeitsynchronisationsnachrichten gemessen werden.

Um die Verweildauer innerhalb der Netzwerkkomponente bestimmen zu können, wird jedoch üblicherweise eine hochgenaue Uhr eingesetzt, da die Genauigkeit einer Zeitsynchronisation der angeschlossenen Slaves, insbesondere bei mehreren als Kaskade hintereinander angeordneten Netzwerkkomponenten, die Transparente Uhren darstellen, stark von der Genauigkeit der ermittelten Verweildauer abhängt. Diese hochgenaue Uhr muss selbst zeitlich synchronisiert werden, um Driften zwischen der Grandmaster-Uhr bzw. den Master-Uhren und der internen Uhr der Netzwerkkomponente zu vermeiden. Aufgrund der hohen Anforderungen sind die bei solchen Netzwerkkomponenten einzusetzenden internen Uhren üblicherweise vergleichsweise teuer.

Aus der US 2008/117938 A1 ist ein Zeitsynchronisationsverfahren gemäß den Precision Time Protocol (PTP) bekannt, bei dem ein spezielles Synchronisationsmodul eingesetzt wird. Aus der US 2012/311168 A1 ist ein Verfahren zur Verbesserung der Genauigkeit eines PTP-Verfahrens bekannt, bei dem eine spezielle Vorbereitung der Datenkorrekturen eingesetzt wird. Aus der US 8,718,482 B1 ist es schließlich bekannt, Zeitnachrichten mit einer hohen Priorität zu übertragen.

Ausgehend von einem Verfahren der eingangs angegebenen Art liegt der Erfindung die Aufgabe zugrunde, eine möglichst genaue Ermittlung der Verweildauer-Information in einer Netzwerkkomponente selbst bei Verwendung einer internen Uhr mit vergleichsweise geringer Genauigkeit durchführen zu können.

Diese Aufgabe wird durch ein Verfahren der eingangs genannten Art gelöst, bei dem die Netzwerkkomponente innerhalb eines Zeitraumes, in dem sie einen Empfang einer Zeitsynchronisationsnachricht erwartet, das Versenden von anderen Nachrichten, die keine Zeitsynchronisationsnachrichten sind, aussetzt.

Der Erfindung liegt die Erkenntnis zugrunde, dass der wesentliche - und variabelste - Anteil der Verweildauer einer Zeitsynchronisationsnachricht innerhalb der Netzwerkkomponente aufgrund des anstehenden Versendens anderer Nachrichten, die ebenfalls über das Kommunikationsnetzwerk übertragen werden, entsteht. Andere Nachrichten, die über dasselbe Kommunikationsnetzwerk wie die Zeitsynchronisationsnachrichten übertragen werden, können unter anderem beispielsweise Messwerte, Steuerbefehle, Zustandsmeldungen, aufgezeichnete Messwertverläufe, Softwareaktualisierungen usw. enthalten.

So können beispielsweise gute Ethernet-Switche in Automatisierungsanlagen im unbelasteten Zustand (keine anderen Nachrichten zu übertragen) die Verweildauer einer Zeitsynchronisationsnachricht auf etwa 5μs begrenzen. Im belasteten Zustand (es werden gleichzeitig auch andere Nachrichten übertragen) eines solchen Switches steigt die Verweildauer hingegen leicht auf bis zu 125μs an. Setzt man eine interne Uhr mit einer Ungenauigkeit von 50ppm ein, so ergibt sich bei der Messung der Verweildauer im unbelasteten Fall eine Ungenauigkeit von 0,25ns. Im belasteten Fall steigt die Ungenauigkeit der Messung der Verweildauer hingegen auf 6,25ns an. Bei mehreren hintereinander geschalteten Netzwerkkomponenten (beispielsweise in ringförmigen Kommunikationsnetzwerken) addiert sich diese Ungenauigkeit schnell zu unakzeptablen Fehlern bei der Zeitsynchronisation. In üblichen Kommunikationsnetzwerken von Automatisierungsanlagen kann die Anzahl von hintereinander geschalteten Netzwerkkomponenten zwischen Master und Slave leicht einen Wert von ca. 50 annehmen.

An diesem Punkt setzt die Erfindung an. Anstelle nämlich durch Einsatz teurer Komponenten die Genauigkeit der internen Uhr einer Netzwerkkomponente zu erhöhen (was beispielsweise die Verwendung einer internen Uhr der Netzwerkkomponenten mit einer Genauigkeit von 0,5-1ppm voraussetzen würde), wird gemäß der Erfindung vielmehr dafür gesorgt, dass die Verweildauer der Zeitsynchronisationsnachricht innerhalb der Netzwerkkomponente so gering wie möglich ist. Da sich die Ungenauigkeit der ermittelten Verweildauer prinzipiell als Produkt aus der Ungenauigkeit der internen Uhr der Netzwerkkomponente und der Verweildauer selbst ergibt, kann auch auf diese Weise - und ohne den Einsatz teurer Komponenten - eine Reduzierung der Ungenauigkeit bei der Ermittlung der Verweildauer erzielt werden. Hierdurch können beispielsweise kostengünstigere interne Uhren mit Genauigkeiten von 50ppm oder schlechter eingesetzt werden.

Kurz gesagt, wird durch das erfindungsgemäße Verfahren der Versand der Zeitsynchronisationsnachricht proaktiv von der Netzwerkkomponente vorbereitet. Da hierzu lediglich der Versand anderer Nachrichten zeitweise ausgesetzt werden muss, sind auch keine aufwendigen Maßnahmen hinsichtlich einer Steuersoftware der Netzwerkkomponente zu implementieren. Ein verzögernder Effekt auf die anderen von der Netzwerkkomponente zu übertragenden Nachrichten kann zudem bei hinreichend klein gewähltem Zeitbereich und aufgrund der Kürze der Zeitsynchronisationsnachrichten selbst sehr gering gehalten werden.

Gemäß einer vorteilhaften Ausführungsform des erfindungsgemäßen Verfahrens ist vorgesehen, dass das Versenden der anderen Nachrichten fortgesetzt wird, wenn die in dem Zeitraum erwartete Zeitsynchronisationsnachricht empfangen und versendet worden ist.

Auf diese Weise kann die Unterbrechung des Versands der anderen Nachrichten so kurz wie möglich gehalten werden. Es wird nämlich nicht unbedingt zwingend das Ende des Zeitraums abgewartet, in dem die Zeitsynchronisationsnachricht erwartet wird. Der Versand der anderen Nachrichten wird nämlich sofort wieder aufgenommen, sobald die erwartete Zeitsynchronisationsnachricht versendet worden ist, auch wenn der Zeitpunkt des Versendens vor dem Ende des fraglichen Zeitbereichs liegen sollte.

Eine weitere vorteilhafte Ausführungsform des erfindungsgemäßen Verfahrens sieht vor, dass zum Aussetzen des Versendens der anderen Nachrichten die Netzwerkkomponente die Abarbeitung einer Nachrichten-Warteschlange, in der die anderen Nachrichten vor ihrem Versenden temporär zwischengespeichert werden, unterbricht.

Hierdurch wird der Versendespeicher, in den die Zeitsynchronisationsnachricht unmittelbar vor ihrem Versenden verschoben wird, proaktiv für die Zeitsynchronisationsnachricht freigehalten, da hierher zeitweise keine anderen Nachrichten aus der Warteschlange (Queue) für zu versendende Nachrichten mehr verschoben werden.

Eine weitere vorteilhafte Ausführungsform des erfindungsgemäßen Verfahrens sieht zudem vor, dass der Zeitraum, in dem der Empfang einer Zeitsynchronisationsnachricht erwartet wird, dadurch vorgegeben wird, dass die Zeitsynchronisationsnachrichten von der Master-Uhr und/oder der Slave-Uhr in regelmäßigen Abständen versendet werden.

Häufig werden nämlich die Zeitsynchronisationsnachrichten vom Master in konstanten Zeitabständen regelmäßig versendet. Beispielsweise kann eine Zeitsynchronisationsnachricht einmal pro Sekunde versendet werden. Daher kann die Netzwerkkomponente bei Kenntnis des Versendetakts aus der letzten empfangenen Zeitsynchronisationsnachricht den erwarteten Zeitpunkt des Empfangs der nächsten Zeitsynchronisationsnachricht ableiten. Selbst wenn der Versendetakt nicht zuvor bekannt sein sollte, kann die Netzwerkkomponente aus den Zeitpunkten von zwei oder mehr bereits empfangenen Zeitsynchronisationsnachrichten neben dem erwarteten Zeitpunkt für den Empfang der nächsten Zeitsynchronisationsnachricht auch den Versendetakt ableiten. In entsprechender Weise können auch Zeitsynchronisationsnachrichten, die von der Slave-Uhr an die Master-Uhr versendet werden, in regelmäßigen Abständig verschickt werden. Der Beginn des Zeitraums kann in diesem Fall beispielweise auf den in den Slaves bekannten Versendezeitpunkt der Zeitsynchronisationsnachricht beim Master gesetzt werden.

Alternativ zu der letztgenannten Ausführungsform kann jedoch auch vorgesehen sein, dass die Master-Uhr und/oder die Slave-Uhr vor dem Versenden einer Zeitsynchronisationsnachricht eine Ankündigungs-Nachricht versendet, die das nachfolgende Versenden der Zeitsynchronisationsnachricht ankündigt, und die Netzwerkkomponente die Ankündigungs-Nachricht zur Bestimmung des Zeitraumes, in dem sie einen Empfang einer Zeitsynchronisationsnachricht erwartet, heranzieht.

Hierdurch kann insbesondere bei nicht regelmäßigem Versand von Zeitsynchronisationsnachrichten der Zeitraum für den erwarteten Empfang der Zeitsynchronisationsnachricht durch die Netzwerkkomponente festgelegt werden. Entweder kann hierbei vereinbart sein, dass die Zeitsynchronisations-Nachricht nach Ablauf eines festen Zeitabstands nach der Ankündigungs-Nachricht ausgesendet wird, so dass die Netzwerkkomponente den Zeitraum direkt aus dem Empfangszeitpunkt der Ankündigungs-Nachricht ableiten kann. Alternativ kann die Ankündigungs-Nachricht entweder den zwischen Ankündigungs-Nachricht und Zeitsynchronisationsnachricht liegenden Zeitabstand oder den geplanten Versandzeitpunkt der Zeitsynchronisationsnachricht enthalten.

Eine weitere vorteilhafte Ausführungsform des erfindungsgemäßen Verfahrens sieht vor, dass die Netzwerkkomponente die Verweildauer-Information direkt in die zugehörige Zeitsynchronisationsnachricht einträgt und die derart modifizierte Zeitsynchronisationsnachricht anstelle der ursprünglich empfangenen Zeitsynchronisationsnachricht versendet.

Dies kann insbesondere bei einer schnellen hardwareunterstützten Ermittlung der Verweildauer-Information erfolgen.

Alternativ dazu kann auch vorgesehen sein, dass die Netzwerkkomponente die Verweildauer-Information in eine Folge-Nachricht einträgt und die Folge-Nachricht nach der zugehörigen Zeitsynchronisationsnachricht versendet.

Diese Variante bietet sich insbesondere bei einer langsameren softwareunterstützten Ermittlung der Verweildauer-Information an.

Die oben genannte Aufgabe wird auch durch eine Netzwerkkomponente zum Betrieb in einem Kommunikationsnetzwerk zum Übertragen von Zeitsynchronisationsnachrichten zwischen einer Master-Uhr und einer mit der Uhrzeit der Master-Uhr zu synchronisierenden Slave-Uhr gelöst, wobei die Netzwerkkomponente zumindest zwei Ports aufweist und dazu eingerichtet ist, die Zeitsynchronisationsnachrichten an einem Port zu empfangen und über einen anderen Port zu versenden, und wobei die Netzwerkkomponente dazu eingerichtet ist, mittels einer internen Uhr eine Verweildauer einer jeweiligen Zeitsynchronisationsnachricht innerhalb der Netzwerkkomponente zwischen dem Empfangen und dem Versenden der Zeitsynchronisationsnachricht zu ermitteln und eine die Verweildauer angebende Verweildauer-Information an die Slave-Uhr zu übermitteln.

Erfindungsgemäß ist vorgesehen, dass die Netzwerkkomponente dazu eingerichtet ist, innerhalb eines Zeitraumes, in dem sie einen Empfang einer Zeitsynchronisationsnachricht erwartet, das Versenden von anderen Nachrichten, die keine Zeitsynchronisationsnachrichten sind, auszusetzen.

Außerdem wird die oben genannte Aufgabe auch durch ein Kommunikationsnetzwerk zum Übertragen von Zeitsynchronisationsnachrichten zwischen einer Master-Uhr und einer mit der Uhrzeit der Master-Uhr zu synchronisierenden Slave-Uhr gelöst, wobei das Kommunikationsnetzwerk eine Netzwerkkomponente aufweist, die zumindest zwei Ports aufweist und dazu eingerichtet ist, die Zeitsynchronisationsnachrichten an einem Port zu empfangen und über einen anderen Port zu versenden, wobei die Netzwerkkomponente ferner dazu eingerichtet ist, mittels einer internen Uhr eine Verweildauer einer jeweiligen Zeitsynchronisationsnachricht innerhalb der Netzwerkkomponente zwischen dem Empfangen und dem Versenden der Zeitsynchronisationsnachricht zu ermitteln und eine die Verweildauer angebende Verweildauer-Information an die Slave-Uhr zu übermitteln, und wobei die Slave-Uhr dazu eingerichtet ist, eine Synchronisierung auf die Master-Uhr unter Verwendung der jeweiligen empfangenen Zeitsynchronisationsnachrichten und der jeweils zugehörigen Verweildauer-Information durchzuführen.

Erfindungsgemäß ist vorgesehen, dass die Netzwerkkomponente dazu eingerichtet ist, innerhalb eines Zeitraumes, in dem sie einen Empfang einer Zeitsynchronisationsnachricht erwartet, das Versenden von anderen Nachrichten, die keine Zeitsynchronisationsnachrichten sind, auszusetzen.

Hinsichtlich der erfindungsgemäßen Netzwerkkomponente und des erfindungsgemäßen Kommunikationsnetzwerkes gelten alle zu dem erfindungsgemäßen Verfahren voranstehend und nachfolgend gemachten Ausführungen und umgekehrt in entsprechender Weise, insbesondere sind die erfindungsgemäße Netzwerkkomponente und das erfindungsgemäße Kommunikationsnetzwerk zur Durchführung des erfindungsgemäßen Verfahrens in jeder beliebigen Ausführungsform oder einer Kombination beliebiger Ausführungsformen eingerichtet. Auch hinsichtlich der Vorteile der erfindungsgemäßen Netzwerkkomponente und des erfindungsgemäßen Kommunikationsnetzwerks wird auf die zu dem erfindungsgemäßen Verfahren beschriebenen Vorteile verwiesen.

Die Erfindung wird nachfolgend anhand eines Ausführungsbeispiels näher erläutert. Die spezifische Ausgestaltung des Ausführungsbeispiels ist für die allgemeine Ausgestaltung des erfindungsgemäßen Verfahrens, der erfindungsgemäßen Netzwerkkomponente und des erfindungsgemäßen Kommunikationsnetzwerks in keiner Weise einschränkend zu verstehen; vielmehr können einzelne Ausgestaltungsmerkmale des Ausführungsbeispiels in beliebiger Weise frei untereinander und mit den voranstehend beschriebenen Merkmalen kombiniert werden.

Es zeigen

Figur 1     ein erstes Ausführungsbeispiel eines Kommunikationsnetzwerks mit einer Master-Uhr und mehreren mit der Master-Uhr zu synchronisierenden Slave-Uhren;

Figur 2     ein zweites Ausführungsbeispiel eines Kommunikationsnetzwerks mit einer MasterUhr und mehreren mit der Master-Uhr zu synchronisierenden Slave-Uhren; und

Figur 3     ein schematisches Ablaufdiagramm zur Erläuterung der Übertragung von Zeitsynchronisationsnachrichten über eine Netzwerkkomponente.

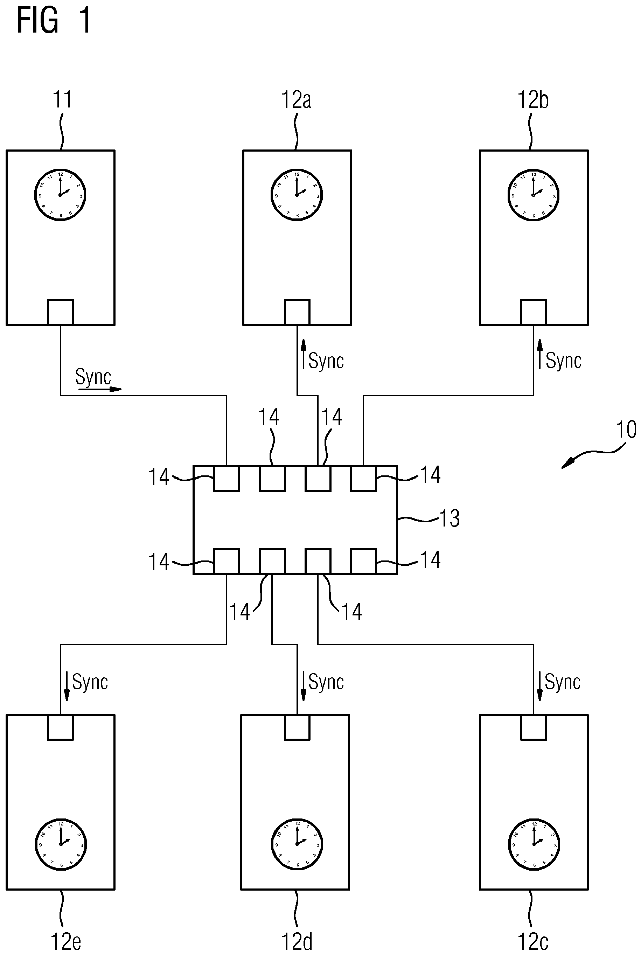

Figur 1 zeigt in schematischer Ansicht ein Kommunikationsnetzwerk 10, an das netzwerkfähige Geräte in Form einer Master-Uhr 11 und mehrerer Slave-Uhren 12a-e angeschlossen sind. Die Geräte können insbesondere Automatisierungsgeräte einer Automatisierungsanlage, z.B. zur Automatisierung eines elektrischen Energieversorgungsnetzes, sein. Es kann sich dabei beispielsweise um Schutzgeräte, Messgeräte, Phasormessgeräte, Power Meter, Power Quality-Geräte, Leit- und Steuergeräte, Schaltersteuerungen etc. einer elektrischen Energieautomatisierungsanlage handeln. Allgemein können solche Automatisierungsgeräte auch als Feldgeräte oder als IEDs ("intelligent electronic devices") bezeichnet werden. Da an dieser Stelle jedoch die Zeitsynchronisationsfunktionalität im Vordergrund steht, werden die Geräte aus diesem Gesichtspunkt nachfolgend als Master- bzw. Slave-Uhren bezeichnet. Wie zuvor bereits erwähnt, umfasst der Begriff Master-Uhr auch die ausgewählte Grandmaster-Uhr, auf die sich letztlich alle Geräte im Kommunikationsnetzwerk synchronisieren.

Außerdem umfasst das Kommunikationsnetzwerk 10 eine Netzwerkkomponente 13, bei der es sich beispielsweise um einen Switch, eine Bridge oder einen Router mit mehreren Ports 14 handeln kann. Die Netzwerkkomponente 13 stellt im Sinne der Norm IEEE 1588-2008 eine "Transparent Clock" dar.

Abweichend von der vereinfachten Darstellung gemäß Figur 1 kann das Kommunikationsnetzwerk auch mehrere hintereinander geschaltete Netzwerkkomponenten umfassen, die solche Transparent Clocks darstellen.

In dem Kommunikationsnetzwerk 10 werden Nachrichten ausgetauscht, die beispielsweise Messwerte, Steuerbefehle, Zustandsmeldungen, aufgezeichnete Messwertverläufe oder Softwareaktualisierungen enthalten können. Zusammengefasst werden solche Nachrichten als "andere Nachrichten" bezeichnet. Um außerdem eine Synchronisation der Slave-Uhren 12a-e hinsichtlich der Master-Uhr 11 vorzunehmen, werden in dem Kommunikationsnetzwerk 10 zusätzlich auch Zeitsynchronisationsnachrichten ausgetauscht. Dies soll später genauer beschrieben werden.

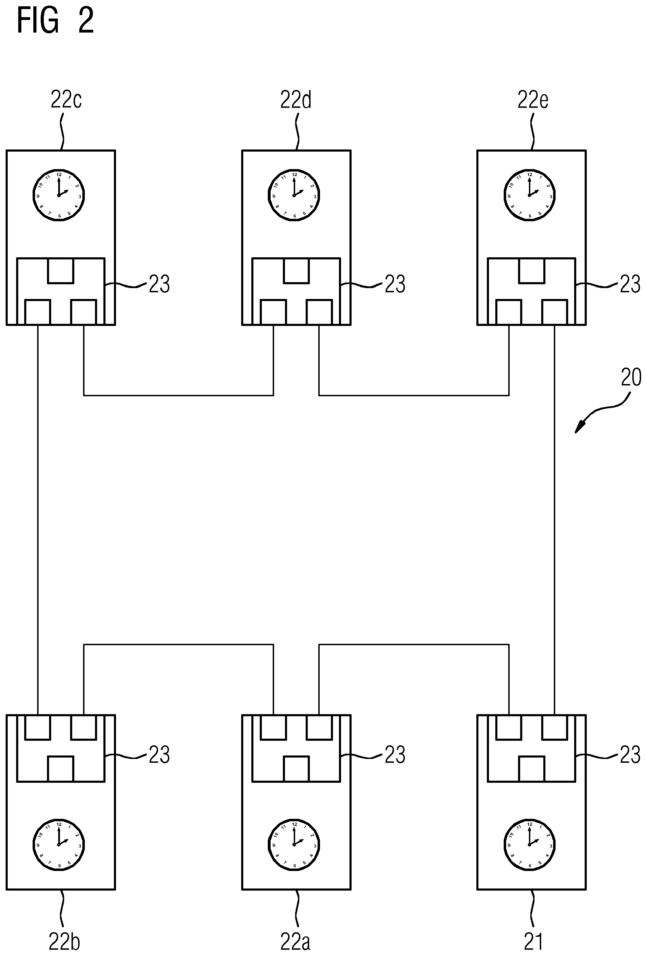

In Figur 2 ist ein weiteres Ausführungsbeispiel eines Kommunikationsnetzwerks 20 dargestellt, wobei das Kommunikationsnetzwerk 20 im Vergleich zum Kommunikationsnetzwerk 10 der Figur 1 eine ringförmige Topologie aufweist. Figur 2 zeigt in schematischer Ansicht ein Kommunikationsnetzwerk 20, an das netzwerkfähige Geräte in Form einer Master-Uhr 21 und mehrerer Slave-Uhren 22a-e angeschlossen sind.

Die Master-Uhr 21 und die Slave-Uhren 22a-e umfassen integrierte Netzwerkkomponenten 23, bei denen es sich beispielsweise um integrierte 3-Port-Switche handeln kann. Auch die Netzwerkkomponenten 23 stellen im Sinne der Norm IEEE 1588-2008 "Transparent Clocks" dar, da beispielsweise die Synchronisation der Slave-Uhr 22b mit der Master-Uhr 21 über die Netzwerkkomponente 23 der Slave-Uhr 22a als Transparent Clock erfolgt.

In dem Kommunikationsnetzwerk 20 werden zur Synchronisation der Slave-Uhren 22a-e hinsichtlich der Master-Uhr 21 Zeitsynchronisationsnachrichten ausgetauscht. Außerdem werden auch andere Nachrichten ausgetauscht.

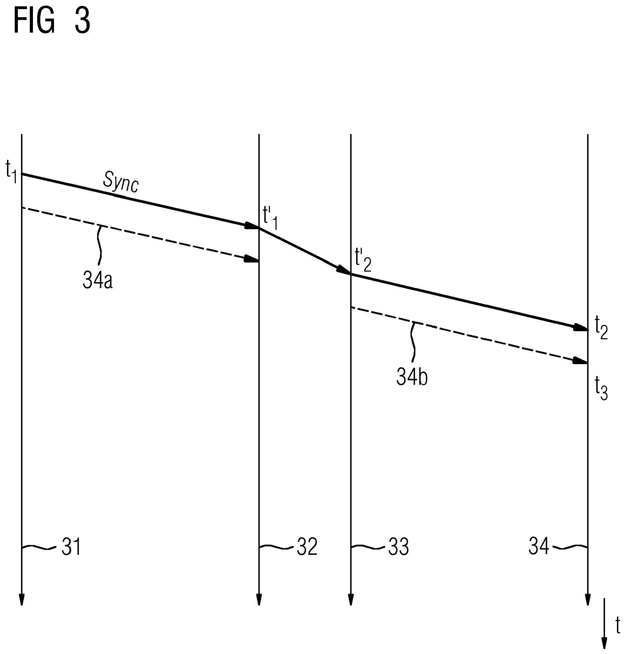

Anhand der Figuren 1 und 3 soll nachfolgend beispielhaft ein Verfahren zur Zeitsynchronisation anhand von in dem Kommunikationsnetzwerk 10 übertragenen Zeitsynchronisationsnachrichten beschrieben werden. Das nachfolgend beschriebene Verfahren kann in entsprechender Weise auch auf das Kommunikationsnetzwerk 20 oder auf andere Kommunikationsnetzwerke, in denen eine Zeitsynchronisation durchgeführt wird, übertragen werden. Dazu ist in Figur 3 zusätzlich ein Ablaufdiagramm angegeben, in dem die Übertragung einer Zeitsynchronisationsnachricht entlang von Zeitstrahlen eingetragen ist. Dabei repräsentiert der Zeitstrahl 31 die Ereignisse auf Seiten der Master-Uhr 11, der Zeitstrahl 32 repräsentiert die Ereignisse auf Seiten einer Slave-Uhr 12a-e (für die nachfolgenden Ausführungen sei der Einfachheit halber beispielhaft die Slave-Uhr 12a ausgewählt) und die Zeitstrahlen 33a und 33b repräsentieren die Ereignisse an einem ersten und einem zweiten Port der Netzwerkkomponente 13.

Zu einem Zeitpunkt $t=t_1$ sendet die Master-Uhr 11 eine Zeitsynchronisationsnachricht "Sync" als Broadcast-Nachricht an die Slave-Uhren 12a-e, darunter auch an die Slave-Uhr 12a. Der Versendezeitpunkt $t_1$ wird der Zeitsynchronisationsnachricht "Sync" als Information beigefügt. Alternativ zum direkten Beifügen des Versendezeitpunktes könnte dieser auch mittels einer nachfolgenden Folge-Nachricht - angedeutet durch einen gestrichelten Pfeil 34a - übertragen werden.

Die Zeitsynchronisationsnachricht "Sync" wird um Zeitpunkt $t=t_1'$ an dem ersten Port der Netzwerkkomponente 13 empfangen, intern bearbeitet und zum Zeitpunkt $t=t_1''$ an dem zweiten Port der Netzwerkkomponente 13 in Richtung der Slave-Uhr 12a versendet. Die Netzwerkkomponente 13 erfasst hierbei die Verweildauer $t_1''-t_1'$ und trägt sie als Verweildauer-Information direkt in die weitergeleitete Zeitsynchronisationsnachricht "Sync" ein. Alternativ könnte die Verweildauer-Information auch - wie in Figur 3 durch einen gestrichelten Pfeil 34b angedeutet - von der Netzwerkkomponente 13 in eine Folge-Nachricht eingetragen und in Richtung der Slave-Uhr 12a versendet werden.

Die Slave-Uhr 12a empfängt die Zeitsynchronisationsnachricht "Sync" (und etwaige Folge-Nachrichten 34a, 34b), erfasst den Empfangs-Zeitpunkt $t=t_2$ und verfügt damit über die Information über die Zeitpunkte $t_1$ und $t_2$ sowie über die Verweildauer-Information $t_1''-t_1'$. Bei bekanntem Offset OS und korrekt synchronisierten Uhren muss hierbei die Beziehung

$$t_2 - (OS + (t_1'' - t_1')) = t_1$$

erfüllt sein. Andernfalls muss die Slave-Uhr zur Zeitsynchronisation entsprechend nachgeführt werden. Der Offset OS kann einmalig oder regelmäßig gemäß dem weiter oben erläuterten Verfahren ermittelt werden.

Um die Verweildauer-Informationen innerhalb der Netzwerkkomponente 13 bestimmen zu können, weist die Netzwerkkomponente eine interne Uhr auf, die den Empfangs-Zeitpunkt und den Versende-Zeitpunkt der Zeitsynchronisationsnachrichten misst. Die Verweildauer muss dabei möglichst genau bestimmt werden, da sie direkt in die Zeitsynchronisation der Slave-Uhren eingeht. Insbesondere in einem Kommunikationsnetzwerk mit mehreren hintereinander angeordneten Netzwerkkomponenten (beispielsweise einem ringförmigen Kommunikationsnetzwerk wie in Figur 2 angegeben) addieren sich nämlich Ungenauigkeiten bei der Bestimmung der Verweildauer und verfälschen damit das Ergebnis der Zeitsynchronisation.

Um zur Verringerung der Ungenauigkeit bei der Bestimmung der Verweildauer nicht auf besonders genaue und damit teure interne Uhren für die Netzwerkkomponenten zurückgreifen zu müssen, wird die Verweildauer selbst derart beeinflusst, dass sie so gering wie möglich ist. Dazu ist vorgesehen, dass die Netzwerkkomponente 13 innerhalb eines Zeitraums, zu dem sie den Empfang einer Zeitsynchronisationsnachricht von der Master-Uhr erwartet, das Versenden anderer Nachrichten aussetzt. Auf diese Weise kann die Hauptursache für eine lange Verweildauer, nämlich das Blockieren des Versendens einer Zeitsynchronisationsnachricht durch eine aktuell noch zu versendende andere Nachricht, ausgeschaltet werden. Beispielsweise unterbricht die Netzwerkkomponente während des fraglichen Zeitraums zeitweise die Abarbeitung einer Warteschlange (Queue) mit zu versendenden anderen Nachrichten, damit die Zeitsynchronisationsnachricht bei ihrem Eintreffen unmittelbar, d.h. ohne den Versand einer anderen Nachricht abwarten zu müssen, weitergeleitet werden kann. Hierdurch verringert sich die Verweildauer der Zeitsynchronisationsnachricht auf ein absolutes Minimum, wodurch sich selbst bei Nutzung einer internen Uhr mit vergleichsweise geringer Genauigkeit, insgesamt nur kleine Ungenauigkeiten bei der Bestimmung der an sich schon kleinen Verweildauer einstellen.

Nach Abschluss des Versendens der Zeitsynchronisationsnachricht kann direkt mit dem Versenden der anderen Nachrichten fortgefahren werden.

Der fragliche Zeitraum, zu dem der Empfang einer Zeitsynchronisationsnachricht erwartet wird, kann bei regelmäßigem Versand der Zeitsynchronisationsnachrichten durch die Master-Uhr und/oder die Slave-Uhren beispielsweise aus dem Zeitpunkt des Empfangs der jeweils letzten Zeitsynchronisationsnachrichten abgeleitet werden. Alternativ dazu können die Master-Uhr bzw. die Slave-Uhren auch Ankündigungs-Nachrichten versenden, die eine baldige Übermittlung der jeweils nächsten Zeitsynchronisationsnachricht ankündigen.

## Patentansprüche

1. Verfahren zum Übertragen von Zeitsynchronisationsnachrichten in einem Kommunikationsnetzwerk (10, 20), bei dem

   - Zeitsynchronisationsnachrichten über das Kommunikationsnetzwerk (10, 20) zwischen einer Master-Uhr (11, 21) und einer mit der Uhrzeit der Master-Uhr (11, 21) zu synchronisierenden Slave-Uhr (12a-e, 22a-e) übertragen werden;
   - eine Netzwerkkomponente (13, 23) des Kommunikationsnetzwerks (10, 20), die zumindest zwei Ports (14) aufweist, die Zeitsynchronisationsnachrichten an einem Port empfängt und über einen anderen Port versendet;
   - die Netzwerkkomponente (13, 23) mittels einer internen Uhr eine Verweildauer einer jeweiligen Zeitsynchronisationsnachricht innerhalb der Netzwerkkomponente (13, 23) zwischen dem Empfangen und dem Versenden der Zeitsynchronisationsnachricht ermittelt und eine die Verweildauer angebende Verweildauer-Information an die Slave-Uhr (12a-e, 22a-e) übermittelt; und
   - die Slave-Uhr (12a-e, 22a-e) eine Synchronisierung auf die Master-Uhr (11, 21) unter Verwendung der jeweiligen empfangenen Zeitsynchronisationsnachrichten und der jeweils zugehörigen Verweildauer-Information durchführt; **dadurch gekennzeichnet, dass**
   - die Netzwerkkomponente (10, 20) innerhalb eines Zeitraumes, in dem sie einen Empfang einer Zeitsynchronisationsnachricht erwartet, das Versenden von anderen Nachrichten, die keine Zeitsynchronisationsnachrichten sind, aussetzt.

2. Verfahren nach Anspruch 1,
   **dadurch gekennzeichnet, dass**

   - das Versenden der anderen Nachrichten fortgesetzt wird, wenn die in dem Zeitraum erwartete Zeitsynchronisationsnachricht empfangen und versendet worden ist.

3. Verfahren nach Anspruch 1 oder 2,
   **dadurch gekennzeichnet, dass**

   - zum Aussetzen des Versendens der anderen Nachrichten die Netzwerkkomponente (13, 23) die Abarbeitung einer Nachrichten-Warteschlange, in der die anderen Nachrichten vor ihrem Versenden temporär zwischengespeichert werden, unterbricht.

4. Verfahren nach einem der vorangehenden Ansprüche,

**dadurch gekennzeichnet, dass**

- der Zeitraum, in dem der Empfang einer Zeitsynchronisationsnachricht erwartet wird, dadurch vorgegeben wird, dass die Zeitsynchronisationsnachrichten von der Master-Uhr (11, 21) und/oder der Slave-Uhr (12a-e, 22a-e) in regelmäßigen Abständen versendet werden.

5. Verfahren nach einem der vorangehenden Ansprüche 1 bis 3,
   **dadurch gekennzeichnet, dass**

   - die Master-Uhr (11, 21) und/oder die Slave-Uhr (12a-e, 22a-e) vor dem Versenden einer Zeitsynchronisationsnachricht eine Ankündigungs-Nachricht versendet, die das nachfolgende Versenden der Zeitsynchronisationsnachricht ankündigt; und
   - die Netzwerkkomponente (13 ,23) die Ankündigungs-Nachricht zur Bestimmung des Zeitraumes, in dem sie einen Empfang einer Zeitsynchronisationsnachricht erwartet, heranzieht.

6. Verfahren nach einem der vorangehenden Ansprüche,
   **dadurch gekennzeichnet, dass**

   - die Netzwerkkomponente (13, 23) die Verweildauer-Information direkt in die zugehörige Zeitsynchronisationsnachricht einträgt und die derart modifizierte Zeitsynchronisationsnachricht anstelle der ursprünglich empfangenen Zeitsynchronisationsnachricht versendet.

7. Verfahren nach einem der Ansprüche 1 bis 5,
   **dadurch gekennzeichnet, dass**

   - die Netzwerkkomponente (13 ,23) die Verweildauer-Information in eine Folge-Nachricht einträgt und die Folge-Nachricht nach der zugehörigen Zeitsynchronisationsnachricht versendet.

8. Netzwerkkomponente (13, 23) zum Betrieb in einem Kommunikationsnetzwerk (10, 20) zum Übertragen von Zeitsynchronisationsnachrichten zwischen einer Master-Uhr (11, 21) und einer mit der Uhrzeit der Master-Uhr (11, 21) zu synchronisierenden Slave-Uhr (12a-e, 22a-e), wobei

   - die Netzwerkkomponente (13, 23) zumindest zwei Ports (14) aufweist und dazu eingerichtet ist, die Zeitsynchronisationsnachrichten an einem Port zu empfangen und über einen anderen Port zu versenden; und wobei
   - die Netzwerkkomponente (13, 23) dazu eingerichtet ist, mittels einer internen Uhr eine Verweildauer einer jeweiligen Zeitsynchronisationsnachricht innerhalb der Netzwerkkomponente (13, 23) zwischen dem Empfangen und dem Versenden der Zeitsynchronisationsnachricht zu ermitteln und eine die Verweildauer angebende Verweildauer-Information an die Slave-Uhr (12a-e, 22a-e) zu übermitteln;
   **dadurch gekennzeichnet, dass**
   - die Netzwerkkomponente (13, 23) dazu eingerichtet ist, innerhalb eines Zeitraumes, in dem sie einen Empfang einer Zeitsynchronisationsnachricht erwartet, das Versenden von anderen Nachrichten, die keine Zeitsynchronisationsnachrichten sind, auszusetzen.

9. Kommunikationsnetzwerk (10, 20) zum Übertragen von Zeitsynchronisationsnachrichten zwischen einer Master-Uhr (11, 21) und einer mit der Uhrzeit der Master-Uhr (11, 21) zu synchronisierenden Slave-Uhr (12a-e, 22a-e), wobei das Kommunikationsnetzwerk (10, 20) eine Netzwerkkomponente (13, 23) aufweist, die zumindest zwei Ports (14) aufweist und dazu eingerichtet ist, die Zeitsynchronisationsnachrichten an einem Port zu empfangen und über einen anderen Port zu versenden; und wobei

   - die Netzwerkkomponente (13, 23) dazu eingerichtet ist, mittels einer internen Uhr eine Verweildauer einer jeweiligen Zeitsynchronisationsnachricht innerhalb der Netzwerkkomponente (13, 23) zwischen dem Empfangen und dem Versenden der Zeitsynchronisationsnachricht zu ermitteln und eine die Verweildauer angebende Verweildauer-Information an die Slave-Uhr (12a-e, 22a-e) zu übermitteln; und wobei
   - die Slave-Uhr (12a-e, 22a-e) dazu eingerichtet ist, eine Synchronisierung auf die Master-Uhr (11, 21) unter Verwendung der jeweiligen empfangenen Zeitsynchronisationsnachrichten und der jeweils zugehörigen Verweildauer-Information durchzuführen;
   **dadurch gekennzeichnet, dass**
   - die Netzwerkkomponente (13, 23) dazu eingerichtet ist, innerhalb eines Zeitraumes, in dem sie einen Empfang einer Zeitsynchronisationsnachricht erwartet, das Versenden von anderen Nachrichten, die keine Zeitsynchronisationsnachrichten sind, auszusetzen.

**Claims**

1. Method for transmitting time synchronization messages in a communication network (10, 20), in which

   - time synchronization messages are transmitted via the communication network (10, 20) between a master clock (11, 21) and a slave clock (12a-e, 22a-e) to be synchronized with the clock time of the master clock (11, 21);

- a network component (13, 23) of the communication network (10, 20), which has at least two ports (14), receives the time synchronization messages at one port and dispatches them via another port;

- the network component (13, 23) determines, by means of an internal clock, a dwell time of a respective time synchronization message within the network component (13, 23) between receiving and dispatching the time synchronization message and conveys dwell time information specifying the dwell time to the slave clock (12a-e, 22a-e); and

- the slave clock (12a-e, 22a-e) performs a synchronization to the master clock (11, 21) by using the respective received time synchronization messages and the respective associated dwell time information; **characterized in that**

- the network component (10, 20) stops dispatching other messages which are not time synchronization messages within a period in which it expects a reception of a time synchronization message.

2. Method according to Claim 1, **characterized in that**

- dispatching of the other messages is continued if the time synchronization message expected in the period has been received and dispatched.

3. Method according to Claim 1 or 2, **characterized in that**

- for stopping the dispatching of the other messages, the network component (13, 23) interrupts the processing of a message queue in which the other messages are temporarily stored before their dispatch.

4. Method according to one of the preceding claims, **characterized in that**

- the period in which the reception of a time synchronization message is expected is predetermined by the fact that the time synchronization messages are dispatched at regular intervals by the master clock (11, 21) and/or the slave clock (12a-e, 22a-e).

5. Method according to one of the preceding Claims 1 to 3, **characterized in that**

- the master clock (11, 21) and/or the slave clock (12a-e, 22a-e) dispatches, before dispatching a time synchronization message, an announcement message which announces the subsequent dispatching of the time synchronization message; and

- the network component (13, 23) uses the announcement message for determining the period in which it expects a reception of a time synchronization message.

6. Method according to one of the preceding claims, **characterized in that**

- the network component (13, 23) enters the dwell time information directly into the associated time synchronization message and dispatches the time synchronization message, modified in this manner, instead of the time synchronization message originally received.

7. Method according to one of Claims 1 to 5, **characterized in that**

- the network component (13, 23) enters the dwell time information into a follow-up message and dispatches the follow-up message after the associated time synchronization message.

8. Network component (13, 23) for operation in a communication network (10, 20) for transmitting time synchronization messages between a master clock (11, 21) and a slave clock (12a-e, 22a-e) to be synchronized with the clock time of the master clock (11, 21), wherein

- the network component (13, 23) has at least two ports (14) and is configured to receive the time synchronization messages at one port and to dispatch them via another port; and wherein

- the network component (13, 23) is configured to determine, by means of an internal clock, a dwell time of a respective time synchronization message within the network component (13, 23) between receiving and dispatching the time synchronization message and to convey dwell time information specifying the dwell time to the slave clock (12a-e, 22a-e); **characterized in that**

- the network component (13, 23) is configured to stop the dispatching of other messages which are not time synchronization messages within a period in which it expects a reception of a time synchronization message.

9. Communication network (10, 20) for transmitting time synchronization messages between a master clock (11, 21) and a slave clock (12a-e, 22a-e) to be synchronized with the clock time of the master clock (11, 21), wherein the communication network (10, 20) has a network component (13, 23) which has at least two ports (14) and is configured to receive the time synchronization messages at one port and to dispatch them via another port; and wherein

- the network component (13, 23) is configured to determine, by means of an internal clock, a dwell time of a respective time synchronization message within the network component (13, 23) between receiving and dispatching the time synchronization message and to convey dwell time information specifying the dwell time to the slave clock (12a-e, 22a-e); and wherein
- the slave clock (12a-e, 22a-e) is configured to perform a synchronization to the master clock (11, 21) by using the respective received time synchronization messages and the respective associated dwell time information;
**characterized in that**
- the network component (13, 23) is configured to stop the dispatching of other messages which are not time synchronization messages within a period in which it expects a reception of a time synchronization message.

**Revendications**

1. Procédé de transmission de messages de synchronisation dans le temps dans un réseau (10, 20) de communication, dans lequel

- on transmet des messages de synchronisation dans le temps par le réseau (10, 20) de communication entre une horloge (11, 21) maître et une horloge (12a-e, 22a-e) esclave à synchroniser avec le temps d'horloge de l'horloge (11, 21) maître ;
- un composant (13, 23) du réseau (10, 20) de communication, qui a au moins deux accès (14), reçoit sur un accès les messages de synchronisation dans le temps et les envoie par un autre accès ;
- le composant (13, 23) du réseau détermine, au moyen d'une horloge interne, une durée de séjour d'un message de synchronisation dans le temps respectif au sein du composant (13, 23) du réseau entre la réception et l'envoi du message de synchronisation dans le temps et transmet, à l'horloge (12a-e, 22a-e) esclave, l'information de durée de séjour indiquant la durée de séjour et
- l'horloge (12a-e, 22a-e) esclave effectue une synchronisation sur l'horloge (11, 21) maître en utilisant les messages de synchronisation dans le temps reçus et l'information de durée de séjour associée ;
**caractérisé en ce que**
- le composant (10, 20) du réseau interrompt dans un laps de temps, dans lequel il attend une réception d'un message de synchronisation, l'envoi d'autres messages, qui ne sont pas des messages de synchronisation dans le temps.

2. Procédé suivant la revendication 1,
**caractérisé en ce que**

- on poursuit l'envoi des autres messages, lorsque le message de synchronisation dans le temps attendu dans le laps de temps a été reçu et envoyé.

3. Procédé suivant la revendication 1 ou 2,
**caractérisé en ce que**

- pour interrompre l'envoi des autres messages, le composant (13, 23) du réseau interrompt la prise en charge d'une file d'attente de messages, dans laquelle les autres messages sont mémorisés intermédiairement temporairement avant leur envoi.

4. Procédé suivant l'une des revendications précédentes,
**caractérisé en ce que**

- on prescrit le laps de temps pendant lequel on attend la réception d'un message de synchronisation dans le temps en envoyant les messages de synchronisation dans le temps par l'horloge (11, 21) maître et/ou l'horloge (12a-e, 22a-e) esclave à des intervalles réguliers.

5. Procédé suivant l'une des revendications précédentes 1 à 3,
**caractérisé en ce que**

- l'horloge (11, 21) maître et/ou l'horloge (12a-e, 22a-e) esclave envoie, avant l'envoi d'un message de synchronisation dans le temps, un message d'annonciation, qui annonce l'envoi suivant du message de synchronisation dans le temps et
- le composant (13, 23) du réseau tire parti du message d'annonciation pour déterminer le laps de temps dans lequel il attend une réception d'un message de synchronisation dans le temps.

6. Procédé suivant l'une des revendications précédentes,
**caractérisé en ce que**

- le composant (13, 23) du réseau insère l'information de durée de séjour directement dans le message de synchronisation de temps associé et envoie le message de synchronisation ainsi modifié au lieu du message de synchronisation reçu initialement.

**7.** Procédé suivant l'une des revendications précédentes 1 à 5,
**caractérisé en ce que**

- le composant (13, 23) du réseau insère l'information de temps de séjour dans un message suivant et envoie le message suivant, après le message de synchronisation dans le temps associé.

**8.** Composant (13, 23) de réseau destiné à fonctionner dans un réseau (10, 20) de communication pour transmettre des messages de synchronisation dans le temps entre une horloge (11, 21) maître et une horloge (12a-e, 22a-e) esclave à synchroniser avec le temps d'horloge de l'horloge (11, 21) maître, dans lequel

- le composant (13, 23) de réseau a au moins deux accès (14) et est conçu pour recevoir les messages de synchronisation dans le temps sur un accès et les envoyer par un autre accès et dans lequel
- le composant (13, 23) de réseau est conçu pour déterminer, au moyen d'une horloge interne, une durée de séjour d'un message de synchronisation dans le temps dans le composant (13, 23) de réseau entre la réception et l'envoi du message de synchronisation dans le temps et transmettre à l'horloge (12a-e, 22a-e) esclave une information de durée de séjour indiquant la durée de séjour ;
**caractérisé en ce que**
- le composant (13, 23) de réseau est conçu pour interrompre, dans un laps de temps dans lequel il attend une réception d'un message de synchronisation dans le temps, l'envoi d'autres messages, qui ne sont pas des messages de synchronisation dans le temps.

**9.** Réseau (10, 20) de communication pour transmettre des messages de synchronisation dans le temps entre une horloge (11, 21) maître et une horloge (12a-e, 22a-e) esclave à synchroniser avec le temps d'horloge de l'horloge (11, 21) maître, le réseau (10, 20) de communication ayant un composant (13, 23) de réseau, qui a au moins deux accès (14) et qui est conçu pour recevoir les messages de synchronisation dans le temps sur un accès et les envoyer par un autre accès et dans lequel

- le composant (13, 23) de réseau est conçu pour déterminer, au moyen d'une horloge interne, une durée de séjour d'un message de synchronisation dans le temps dans le composant (13, 23) de réseau entre la réception et l'envoi du message de synchronisation dans le temps et transmettre à l'horloge (12a-e, 22a-e) esclave une information de durée de séjour indiquant la durée de séjour et dans lequel

- l'horloge (12a-e, 22a-e) esclave est conçue pour effectuer une synchronisation sur l'horloge (11, 21) maître en utilisant les messages de synchronisation dans le temps, qui sont reçus, et l'information de durée de séjour associée ; **caractérisé en ce que**
- le composant (13, 23) de réseau est conçu pour interrompre, dans un laps de temps dans lequel il attend une réception d'un message de synchronisation dans le temps, l'envoi d'autres messages, qui ne sont pas des messages de synchronisation dans le temps.

FIG 1

FIG 2

# FIG 3

**IN DER BESCHREIBUNG AUFGEFÜHRTE DOKUMENTE**

**In der Beschreibung aufgeführte Patentdokumente**

- EP 2680466 A1
- US 2008117938 A1
- US 2012311168 A1
- US 8718482 B1